# EUROPEAN PATENT APPLICATION

(11) **EP 4 494 989 A1**
(43) Date of publication of application: **22.01.2025**
(21) Application number: 24189863.4
(22) Date of filing: 19.07.2024
(51) Int. Cl.: B62K 9/00, B62D 21/14, B62K 15/00, A63H 17/26, A63H 29/22

(54) **TRANSFORMABLE RIDE-ON VEHICLE**

(30) Priority: 21.07.2023 US 202363514894 P; 14.06.2024 US 202463660053 P
(71) Applicant: Huffy Corporation, Miamisburg, OH 45342 (US)
(72) Inventor: JESSIE, JR., Donald K., Miamisburg, 45342 (US); SCHANK, Jordan, Miamisburg, 45342 (US)
(74) Representative: Reddie & Grose LLP

(57) **Abstract**

A ride-on vehicle (10,110) includes a main chassis (12, 112) and a plurality of wheels (36, 136) connectable to the main chassis (12, 112). The main chassis (12, 112) includes a front chassis portion (14, 114) and a rear chassis portion (16, 116). The front chassis portion (14, 114) is movable relative to the rear chassis portion (16, 116) between a nested state and an expanded state. The main chassis (12, 112) has a volume in the nested state that is less than a volume of the main chassis (12, 112) when in the expanded state. The ability to transform the main chassis (12, 112) of the ride-on vehicle (10, 110) provides many benefits to shipping, storing, and displaying the ride-on vehicle (10, 110) to and at retail outlets.

## Description

### Technical Field

This disclosure relates generally to vehicles for children, and more particularly to a child ride-on vehicle transformable between a disassembled, nested configuration (beneficial during transit, storage, and display of the vehicle, for example) and an assembled, expanded configuration of a standard size of child ride-on vehicle that is ready for use.

### Background

Motorized and other ride-on vehicles are among the most popular outdoor toys for young children. Such ride-on vehicles are typically manufactured and shipped to various retail outlets in a disassembled state and in packaging of sufficient size to contain the parts of the ride-on vehicle. In many cases, the main chassis of the vehicle is provided as a single piece to ensure sufficient structural integrity of the vehicle during use and of additional components, such as wheels, doors, fenders, steering wheel, etc., that may be attached to the main chassis during assembly. As the main chassis is typically the largest single piece of the vehicle, the main chassis typically dictates the size of the packaging for the ride-on vehicle.

In many cases, the product packaging of a ride-on vehicle takes the form of a generally rectangular box or the like that conforms with the norms of the shipping and retail industries. Because the main chassis of the ride-on vehicle can be relatively large, the box used to package the vehicle can also be relatively large. As such, the box carrying the disassembled ride-on vehicle generally occupies a large amount of space during shipping to the retail outlet, thereby increasing the cost for shipping the product to the retail outlet.

Additionally, once the product arrives at the retail outlet, the product may be stored in a storage area prior to being displayed on shelving at the retail outlet. Storage space at the retail outlet may be at a premium and the stored boxes of ride-on vehicles may take up significant space. Accordingly, retail outlets may keep relatively few vehicles in stock at the outlet. Moreover, once the packaged ride-on vehicles are moved to shelving space, the rather large boxes may take up a significant amount of shelving space, which may also be at a premium. Similarly, the retail outlet may only display a relatively small number of ride-on vehicles.

Thus, there is a need in the industry to provide ride-on vehicles that can be shipped, stored, and displayed in a reduced-size, compact configuration, but yet have an assembled configuration with a size and structural integrity consistent with traditional ride-on vehicles.

### Summary

Certain exemplary aspects of the invention are set forth below. It should be understood that these aspects are presented merely to provide the reader with a brief summary of certain forms the invention might take and that these aspects are not intended to limit the scope of the invention.

In a first aspect of the invention, a ride-on vehicle is disclosed. The ride-on vehicle includes a main chassis and a plurality of wheels connectable to the main chassis. The main chassis includes a front chassis portion and a rear chassis portion. The front chassis portion is movable relative to the rear chassis portion between a nested state and an expanded state. The main chassis has a volume in the nested state that is less than a volume of the main chassis when in the expanded state. At least one of the plurality of wheels is connectable to the front chassis portion and at least one of the plurality of wheels is connectable to the rear chassis portion. The ability to transform the main chassis of the ride-on vehicle provides many benefits to shipping, storing, and displaying the ride-on vehicle to and at retail outlets.

In one embodiment, the front chassis portion may be slidable relative to the rear chassis portion between the nested state and the expanded state. In an alternative embodiment, the front chassis portion may be stackable or unstackable relative to the rear chassis portion between the nested state and the expanded state. Additionally, the volume of the main chassis in the nested state and the expanded state may be a rectangular volume, such as that provided by a rectangular box that tightly contains the main chassis. In one embodiment, the rectangular volume of the main chassis in the nested state may be between about 50% and about 90% of the rectangular volume of the main chassis in the expanded state. More preferably, the rectangular volume of the main chassis in the nested state may be between about 60% and about 80% of the rectangular volume of the main chassis in the expanded state.

In one embodiment, the main chassis may include a structural support frame having a front frame portion and a rear frame portion moveable relative to each other. The front frame portion may be connected to and carry the front chassis portion and the rear frame portion may be connected to and carry the rear chassis portion. In one embodiment, the structural support frame member may be a tubular body such that the front frame portion includes one or more tube members and the rear frame portion includes one or more tube members. Tube members from the front frame portion and tube members from the rear frame portion may engage at an interface that defines a telescoping connection. The telescoping connection is at least in part what allows the transformation of the ride-on vehicle between the nested state and the expanded state.

In one embodiment, the tube members may include a lock member that locks the relative position of the front frame portion and the rear frame portion of the structural support frame. In various embodiments, the lock member may include a pin, bolt, latch, hook, etc. In one embodiment, the lock member may be releasable such that the main chassis is movable from the expanded state back to the nested state. In another embodiment, once the main chassis has been moved from the nested state to the expanded state, it may not be intended to move back to the nested state.

In one embodiment, the ride-on vehicle may be an electric ride-on vehicle. In this regard, the ride-on vehicle may include a motor, a battery, and an actuator. The motor may be an electric motor configured to turn one or more of the plurality of wheels. The battery may be operatively connected to the motor and may be of the rechargeable type. The actuator may be a pedal, button, lever or the like in the cabin of the ride-on vehicle for energizing the motor and causing movement of the ride-on vehicle.

In another aspect of the invention, a method of packaging a ride-on vehicle is disclosed. The method includes providing the main chassis in the nested state and placing the main chassis in a package when in the nested state. The volume of the package is smaller than the volume of a package that contains the main chassis in the expanded state. Thus, the package is smaller than it otherwise would be. In one embodiment, the package may be a box, such as a rectangular box, and the volume of the box is smaller than it otherwise would be if it contained the main chassis in the expanded state.

In another aspect of the invention, a method of shipping a ride-on vehicle is disclosed. The method includes at a first location, placing the ride-on vehicle in a package when the main chassis is in the nested state and moving the package from the first location to a second location while the main chassis is in the nested state. Similar to the above, the package may be a box, such as a rectangular box. Additionally, the first location may be a manufacturing facility and the second location may be a retail outlet.

In a further aspect of the invention, a method of assembling a ride-on vehicle is disclosed. The method includes moving the main chassis from the nested state to the expanded state, connecting at least one wheel to the front chassis portion and connecting at least one wheel to the rear chassis portion. In one embodiment, moving the main chassis from the nested state to the expanded state may include moving the front chassis portion and the rear chassis portion in opposite directions. In one embodiment, the front chassis portion and the rear chassis portion may slide relative to one another, such as along a telescoping connection between the two. In an alternative embodiment, the front chassis portion and the rear chassis portion may be stackable relative to each other and moving (or transforming) the main chassis from the nested state to the expanded state may include unstacking the front chassis portion from atop the rear chassis portion. In one embodiment, the method may further include locking the relative position of the front chassis portion relative to the rear chassis portion when in the expanded state. The method may also include connecting one or more components on the main chassis to assemble the ride-on vehicle.

In a further aspect of the invention, a product for storage and/or display at a retail outlet is disclosed. The product includes a box and a ride-on vehicle contained in the box. The ride-on vehicle includes a main chassis including a front chassis portion and a rear chassis portion. The front chassis portion is movable relative to the rear chassis portion between a nested state and an expanded state. The main chassis has a volume in the nested state that is less than a volume of the main chassis when in the expanded state. At least one of the plurality of wheels is connectable to the front chassis portion and at least one of the plurality of wheels is connectable to the rear chassis portion. The main chassis is in the nested state when contained in the box. The box may include additional components for attachment to the main chassis.

It will be understood that the various embodiments and aspects described above can be combined in any combination or sub-combination without departing from the scope of this disclosure.

### Brief Description of the Drawings

The accompanying drawings are included to provide a further understanding and are incorporated in and constitute a part of this specification. The drawings illustrate one or more embodiment(s), and together with the description serve to explain principles and operation of the various embodiments. Features and attributes associated with any of the embodiments shown or described may be applied to other embodiments shown, described, or appreciated based on this disclosure.
Fig. 1 is a perspective view of a ride-on vehicle in accordance with an embodiment of the invention in a fully assembled state.
Fig. 2 is a front view of the ride-on vehicle shown in Fig. 1.
Fig. 3 is a rear view of the ride-on vehicle shown in Fig. 1.
Fig. 4 is a right-side view of the ride-on vehicle shown in Fig. 1.
Fig. 5 is a left-side view of the ride-on vehicle shown in Fig. 1.
Fig. 6 is a top view of the ride-on vehicle shown in Fig. 1.
Fig. 7 is a bottom view of the ride-on vehicle shown in Fig. 1.
Fig. 8 is a left-side view of the ride-on vehicle in accordance with an embodiment of the invention in a disassembled state and contained in a package.
Fig. 9 is a bottom view of the ride-on vehicle shown in Fig. 8.
Fig. 10 is a perspective view of a ride-on vehicle in accordance with an embodiment of the invention in a fully assembled state.
Fig. 11 is an alternative perspective view of the ride-on vehicle shown in Fig. 10, showing a structural support frame of the ride-on vehicle.
Fig. 12 is a front view of the ride-on vehicle shown in Fig. 10.
Fig. 13 is a right-side view of the ride-on vehicle shown in Fig. 10.
Fig. 14 is an exploded perspective view of the ride-on vehicle in accordance with an embodiment of the invention in a disassembled state.
Fig. 15 is an alternative exploded perspective view of the ride-on vehicle shown in Fig. 14, showing a structural support frame of the ride-on vehicle separated into a front frame portion and a rear frame portion.
Fig. 16 is a front view of the ride-on vehicle shown in Fig. 14 in a nested configuration.
Fig. 17 is a right-side view of the ride-on vehicle shown in Fig. 16.

It should be understood that the appended drawings are not necessarily to scale and may present a somewhat simplified representation of various features illustrative of the basic principles of the disclosure. For example, certain features illustrated by the drawings may be enlarged or distorted relative to others to facilitate visualization and a clear understanding.

### Detailed Description

The exemplary embodiments described herein are provided for illustrative purposes and are not limiting. Other exemplary embodiments are possible, and modifications may be made to the exemplary embodiments within the scope of the present disclosure. Therefore, the description below is not meant to limit the scope of the present disclosure.

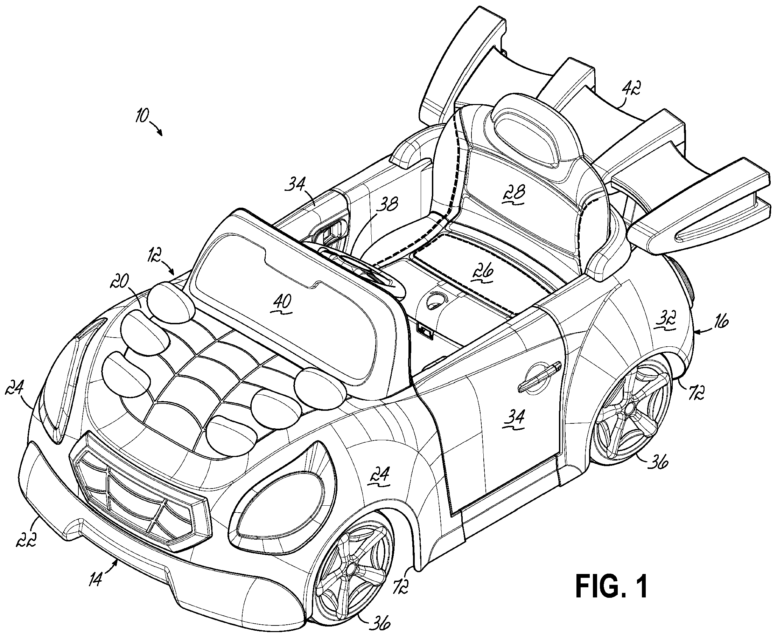

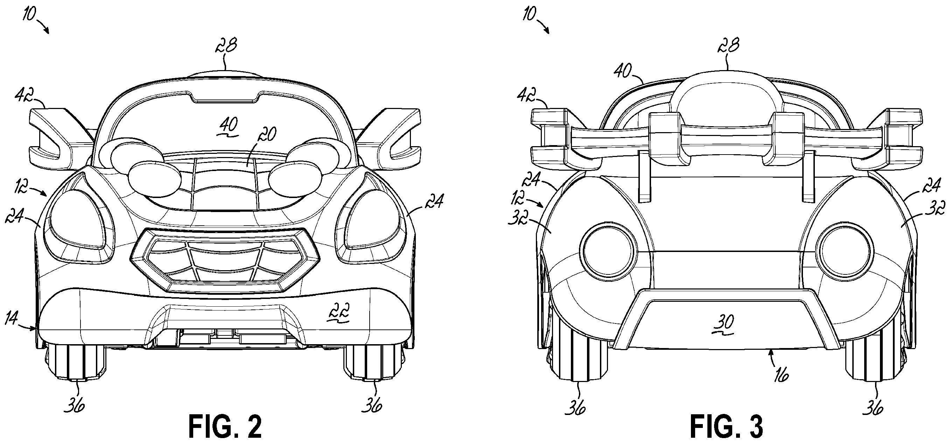

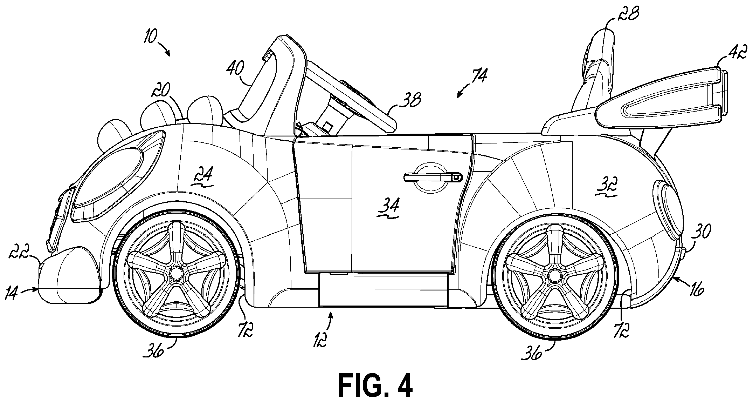

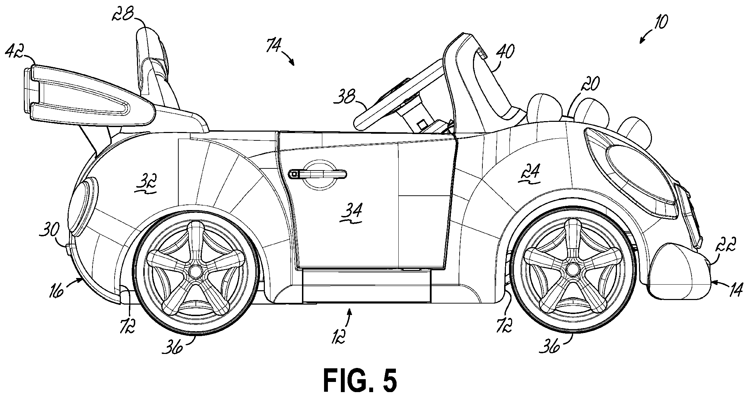

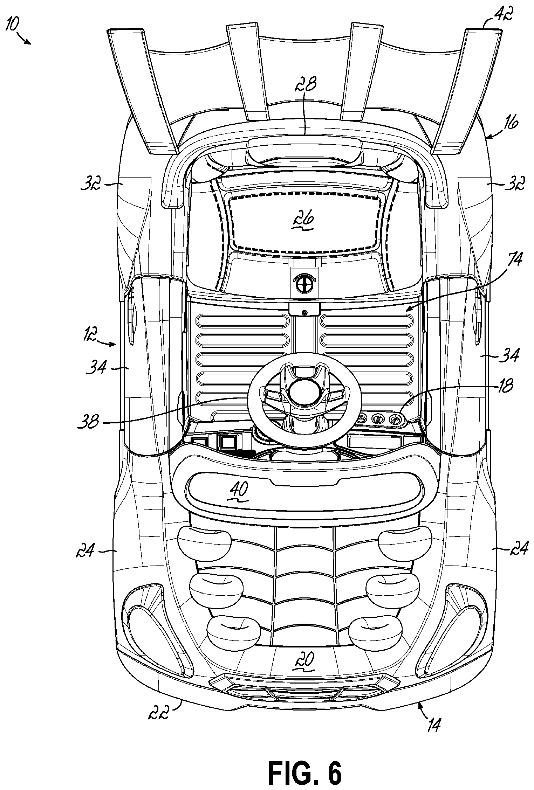

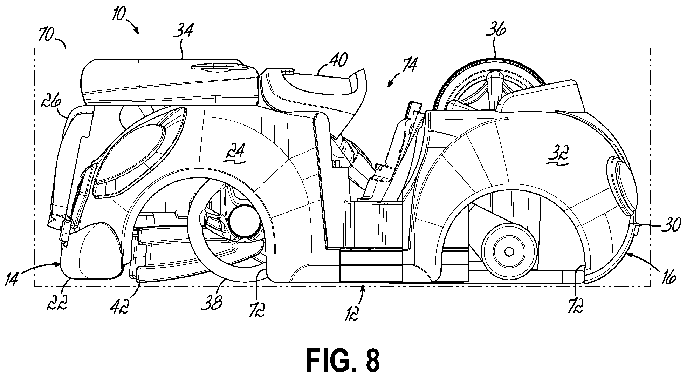

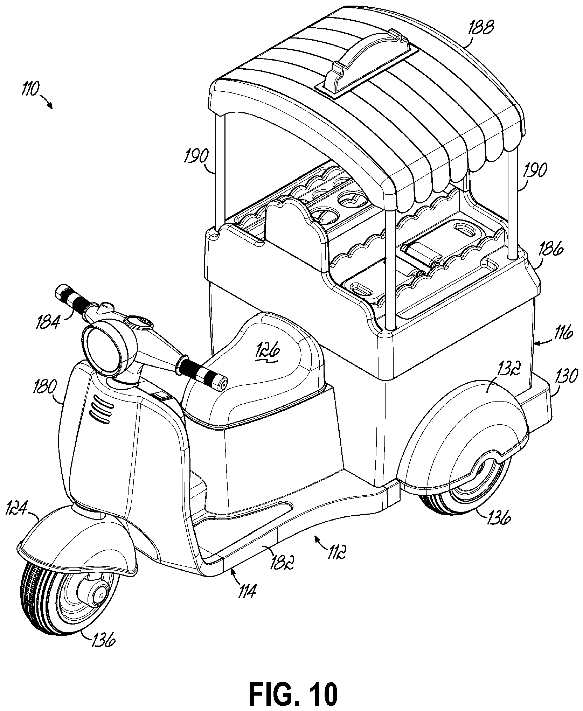

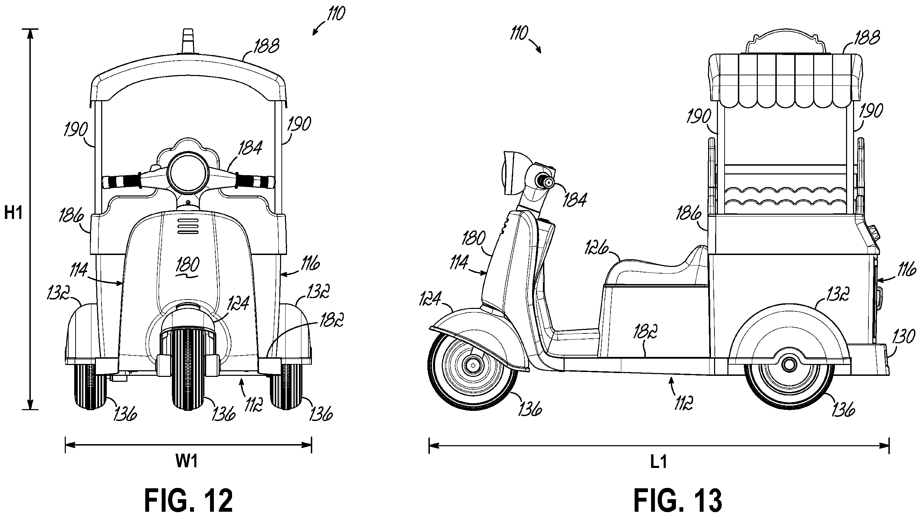

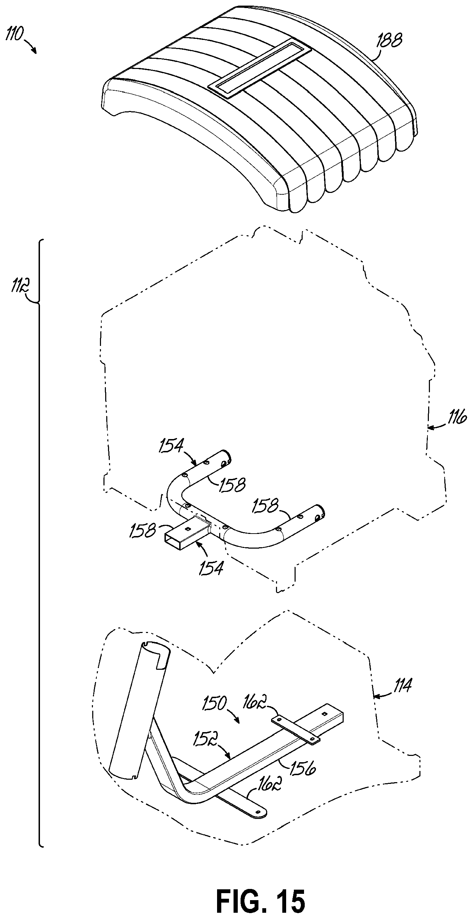

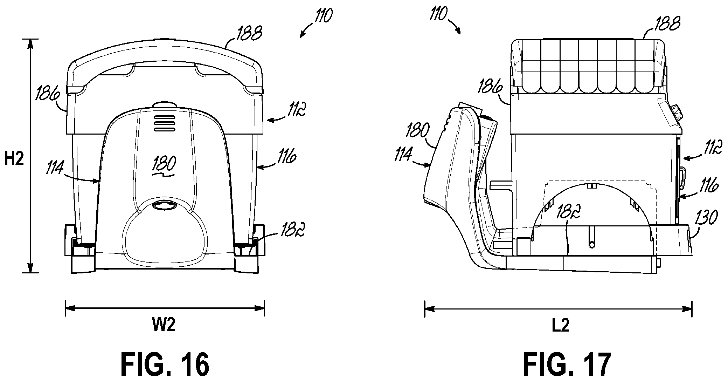

In general, the description relates to embodiments of a child ride-on vehicle 10, 110 transformable between a nested state or configuration and an expanded state or configuration. Particularly, the main chassis 12, 112 of the ride-on vehicle 10, 110 is configured to be selectively transformable between a nested state or configuration (shown in Figs. 8 and 16, for example) and an expanded state or configuration (shown in Figs. 1 and 10, for example). Figs. 1-9 illustrate a first embodiment of the ride-on vehicle 10, described in greater detail below, wherein portions of the main chassis 12 are slidable relative to each other. Figs. 10-17 illustrate a second embodiment of the ride-on vehicle 110, described in greater detail below, wherein portions of the main chassis 112 are stackable (and unstackable) relative to each other. The ability to transform the main chassis 12, 112 of the ride-on vehicle 10, 110 provides many benefits to shipping, storing, and displaying the ride-on vehicle to and at retail outlets. Other advantages and technical effects of the embodiments of this invention will become evident to one skilled in the art from the following description.

Referring now to the Figures, Figs. 1-7 illustrate a first embodiment of the child ride-on vehicle 10 in accordance with an aspect of the invention. The vehicle 10 is illustrated in an assembled form of standard size for child ride-on vehicles and is ready for use. The vehicle 10 includes a main chassis 12 including a front chassis portion 14 defining the front of the vehicle 10 and a rear chassis portion 16 defining the rear of the vehicle 10. In one embodiment, the front chassis portion 14 may include various features, such as, a dashboard 18, hood 20, front bumper 22, and front fenders 24, for example. Additionally, the rear chassis portion 16 may include features such as a seat 26, backrest 28, rear bumper 30, and rear fenders 32, for example. The front and rear chassis portions 14, 16 may include additional or alternative features and aspects of the invention should not be limited to those specifically listed above. Additionally, each of the front and rear chassis portions 14, 16 may be molded bodies formed, for example, as monolithic bodies. In an alternative embodiment, each of the front and rear chassis portions 14, 16 may not be formed as monolithic bodies.

The ride-on vehicle 10 includes a number of components that are attached to the main chassis 12 during assembly of the vehicle 10. By way of example, and without limitation, the vehicle 10 may include doors 34 attached to the main chassis 12, such as at one or both of the front chassis portion 14 and the rear chassis portion 16. In one embodiment, the doors 34 may be pivotally attached to the front chassis portion 14 and latchable to the rear chassis portion 16. The ride-on vehicle 10 may also include a plurality of wheels 36 that are rotatably attached to the main chassis 12. For example, the front chassis portion 14 may include two wheels 36 attached to the front chassis portion 14 below the front fenders 24, and the rear chassis portion 16 may include two wheels 36 attached to the rear chassis portion 16 below the rear fenders 32.

With continued reference to Figs. 1-7, the ride-on vehicle 10 may include a number of other components that are attached to the main chassis 12 during assembly of the vehicle 10. By way of example, and without limitation, the vehicle 10 may include a steering wheel 38 attached to the front chassis portion 14 at, for example, the dashboard 18. The front chassis portion 14 may further include a windshield 40 attached just above the dashboard 18 and before the hood 20. Additionally, the vehicle 10 may include one or more aesthetic features. For example, in one embodiment, the vehicle 10 may include a spoiler 42 attached to the rear chassis portion 16. Aspects of the invention should not be limited to the additional components expressly provided above as additional or alternative components may be attached to the main chassis 12 depending on the overall design of the ride-on vehicle 10.

In one particular aspect of the invention, the main chassis 12 of the child vehicle 10 is configured to be selectively transformable between a nested state or configuration and an expanded state or configuration. In the nested state, the main chassis 12 is configured to be compact and occupy a small amount of space (volume). In the expanded state, the main chassis 12 is at its full, operational size. The full, operational size of the main chassis 12 is consistent with traditional ride-on vehicles currently found in the market. In the nested state, the rectangular volume (length x height x width) of the main chassis 12 is less than the rectangular volume of the main chassis 12 in the expanded state. For example, the rectangular volume of the main chassis 12 in the nested state may be between about 50% and about 90% of the rectangular volume of the main chassis 12 in the expanded state. Particularly, the rectangular volume of the main chassis 12 in the nested state may be between about 60% and about 80% of the rectangular volume of the main chassis 12 in the expanded state. Other values may be possible. The ability of the ride-on vehicle 10 to transform between the nested state (having a comparatively small volume) and the expanded state (having a comparatively large volume) provides a number of advantages to manufacturers and retailers, as will be described in greater detail below.

For example, because the ride-on vehicle 10 occupies less volume in the nested state, the ride-on vehicle 10 may be packaged in a box (or other packaging) in the nested state so that the box has a reduced size (e.g., volume) compared to a box that would contain the vehicle 10 in the expanded state. The reduced size of the box reduces costs at least due to reduced material usage (e.g., paper, cardboard, or the like). The reduced size of the box also facilitates handling of the box during, for example, storing and loading of the boxes at the manufacturing site, shipping of the box to retail outlets, and unloading, storing, and stocking the box once at the retail outlet. In regard to shipping, the reduced size of the box may also reduce shipping costs to the retail outlet.

At the retail outlet, more reduced-size boxes may be stored in a given amount of storage space for that particular product in a warehouse or in the back of the outlet. Additionally, when the reduced-size boxes are placed on shelves in the consumer-accessible portion of the retail outlet, a greater number of reduced-size boxes may be presented to the customer for purchase (e.g., in the same amount of space). Thus, a greater number of ride-on vehicles 10 may be kept in stock at the retail outlet and a greater number of ride-on vehicles 10 may be displayed to consumers for purchase. It is believed that these factors may culminate in easier handling of the ride-on vehicles 10 at the retail space, greater sales of the ride-on vehicles 10, and more satisfied customers.

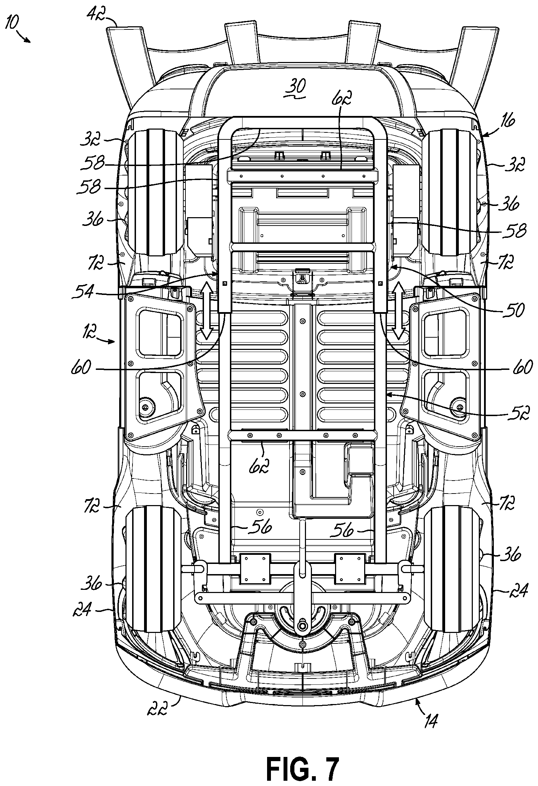

Referring specifically to Fig. 7, the main chassis 12 may include a structural support frame 50 on which the main chassis 12 is mounted. The structural support frame 50 may include a front frame portion 52 and a rear frame portion 54 movable relative to each other. The front frame portion 52 may be connected to and carry the front chassis portion 14 and the rear frame portion 54 may be connected to and carry the rear chassis portion 16. The front frame portion 52 and the rear frame portion 54 may be slidable relative to each other. In this regard, the structural support frame 50 may be formed by a plurality of tube members 56, 58. For example, the front frame portion 52 may be formed by one or more front tube members 56 and the rear frame portion 54 may likewise be formed by one or more rear tube members 58.

The tube members 56, 58 are sized to define a telescoping connection 60 at an interface between certain tube members 56, 58 of the front and rear frame portions 52, 54. Such a telescoping connection 60 is what allows the main chassis 12, in this embodiment, to be transformable between the nested state and the expanded state via a sliding action. The front frame portion 52 and/or the rear frame portion 54 may include additional bracing members 62 to add structural support to the ride-on vehicle 10. However, the bracing members 62 should not be arranged to interfere with the sliding movement of the main chassis 12 between the nested state and the expanded state. The structural support frame 50 may further include a lock member for securing the main chassis 12 in the expanded state, as will be described in greater detail below. By way of example, the tube members 56, 58 may include one or more lock members such as latches, spring pins, or the like. that lock the relative position of the front frame portion 52 and the rear frame portion 54 when moved to the desired expanded state.

In one embodiment, the lock member may be manually imposed, such as by inserting a lock pin during assembly of the ride-on vehicle 10. In an alternative embodiment, the lock member may be of an automatic type, such as a spring-biased pin or latch, that automatically locks the relative position of the front and rear frame portions 52, 54 when in a desired position (e.g., in the expanded state). In one embodiment, the lock member may be configured to be selectively releasable such that the main chassis 12 may be moved from the expanded state back to the nested state. In an alternative embodiment, however, the lock member may be configured not to be releasable or removeable such that the main chassis 12 may not be transformed from the expanded state back to the nested state. In other words, after the ride-on vehicle 10 is initially assembled, the lock member may prevent one from disassembling the vehicle 10. Such may be important at least for reasons of safety and/or structural integrity.

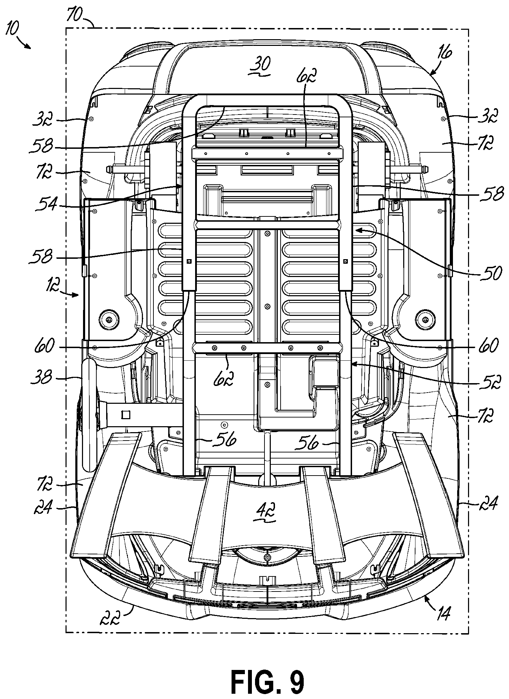

Referring now to Figs. 8 and 9, the Figures illustrate the ride-on vehicle 10 in a disassembled state with the main chassis 12 in the nested state. As noted above, in the nested state, the main chassis 12 has a compact design and is configured to fit within a relatively small package, such as a box 70. As illustrated in these figures, a number of the vehicle components may be advantageously placed about the nested main chassis 12 within the box 70. By way of example, and without limitation, the wheels 36 may be placed in the cabin area 74 where the seat 26 would normally reside, the windshield 40 may be placed adjacent to the dashboard 18, and the doors 34 may be placed on top of the hood 20. Additionally, the wheel wells 72 may also be used to store various components. For example, the steering wheel 38 may be placed in one of the wheel wells 72. Moreover, the spoiler 42 may be placed in one or more of the wheel wells 72 (e.g., if the spoiler 42 includes multiple pieces). In other words, the space in the main chassis 12 when the vehicle 10 is in the nested state may be used to store the components of the ride-on vehicle 10 that are to be connected to the vehicle 10 during assembly. Thus, the size of the package, e.g., box 70, may be maintained as small as possible. It should be appreciated, however, that the reduction in the size of the main chassis 12 (from the expanded state to the nested state) is what provides the greatest reduction in the size of the box 70.

When a consumer returns home from the retail outlet, the box 70 may be opened and the ride-on vehicle 10 may be assembled. One step of the assembly process is to move the main chassis 12 from the nested state to the expanded state. For example, to assemble the main chassis 12, the consumer may pull the front chassis portion 14 and the rear chassis portion 16 in opposite directions until the main chassis 12 is in its expanded state. At that point, the front frame portion 52 may be locked (e.g., by one or more locking members) relative to the rear frame portion 54, either manually or automatically, as discussed above. Once the main chassis 12 has been moved to its expanded state, the wheels 36 and other components (e.g., doors 34, steering wheel 38, windshield 40, spoiler 42, or the like) may be connected to the main chassis 12 of the ride-on vehicle 10. One of ordinary skill in the art will understand how to connect these components to the main chassis 12 and no further explanation will be provided. Subsequent to this assembly, the ride-on vehicle 10 is ready to be used.

Referring now to Figs. 10-17, the Figures illustrate a second embodiment of the child ride-on vehicle 110 in accordance with an aspect of the invention. The vehicle 110 of Figs. 10-17 includes substantially the same elements as the vehicle 10 of Figs. 1-9. These elements are provided with similar reference numbers in the 100 series without further explanation below except for the differences in the alternative embodiment of the vehicle 110. For example, the main chassis 112 (shown in Fig. 10, for example) is analogous to the main chassis 12 (shown in Fig. 1, for example), the front chassis portion 114 (shown in Fig. 10, for example) is analogous to the front chassis portion 14 (shown in Fig. 1, for example), the rear chassis portion 116 (shown in Fig. 10, for example) is analogous to the rear chassis portion 16 (shown in Fig. 1, for example), and so on. The vehicle 110 of Figs. 10-17 differs from the vehicle 10 of Figs. 1-9 primarily in how the vehicle 110 moves or transforms between a nested and expanded configuration. As will be explained in greater detail below, the front chassis portion 114 (and the front frame portion 152) of the vehicle 110 is stacked and unstacked relative to the rear chassis portion 116 (and the rear frame portion 154) to transition between the nested and expanded configurations of the vehicle 110 (in contrast to the sliding action of vehicle 10).

Referring now to Figs. 10-13, the vehicle 110 is shown in an assembled form of standard size for child ride-on vehicles and is ready for use. The vehicle 110 includes a main chassis 112 including a front chassis portion 114 defining a front of the vehicle 110 and a rear chassis portion 116 defining a rear of the vehicle 110. The front chassis portion 114 may include various features, such as, a front fender 124, a front panel 180, and a foot board 182, for example. Additionally, the rear chassis portion 116 may include features such as a rear bumper 130 and a rear fender 132, for example. The front and rear chassis portions 114, 116 may include additional or alternative features and aspects of the invention should not be limited to those specifically listed above. Additionally, each of the front and rear chassis portions 114, 116 may be molded bodies formed, for example, as monolithic bodies. In an alternative embodiment, each of the front and rear chassis portions 114, 116 may not have monolithic bodies.

The ride-on vehicle 110 includes a number of components that are attached to the main chassis 112 during assembly of the vehicle 110. By way of example, and without limitation, the vehicle 110 may include a plurality of wheels 136 that are rotatably attached to the main chassis 112. For example, the front chassis portion 114 may include one wheel 136 attached to the front chassis portion 114 just under the front fender 124, and the rear chassis portion 116 may include two wheels 136 attached to the rear chassis portion 116 just under the rear fenders 132. The ride-on vehicle 110 may further include a number of other components that are attached to the main chassis 112 during assembly of the vehicle 110. By way of example, and without limitation, the vehicle 110 may include handle bars 184 attached to the front chassis portion 114 atop the front panel 180. The front chassis portion 114 may further include a seat 126. Additionally, the vehicle 110 may include one or more aesthetic features. For example, in one embodiment, the vehicle 110 may include a vending kiosk 186 covered by a canopy 188 supported by poles 190 and attached to the rear chassis portion 116. Aspects of the invention should not be limited to the additional components provided above as additional or alternative components may be attached to the main chassis 112 depending on the overall design of the ride-on vehicle 110.

In one particular aspect of the invention, the main chassis 112 of the child vehicle 110 is configured to be selectively transformable between a nested state or configuration and an expanded state or configuration. In the nested state, the main chassis 112 is configured to be compact and occupy a small amount of space. In the expanded state, the main chassis 112 is at its full, operational size. The full, operational size of the main chassis 112 is consistent with traditional ride-on vehicles currently found in the market. In the nested state, the rectangular volume (length x height x width) of the main chassis 112 is less than the rectangular volume of the main chassis 112 in the expanded state. For example, the rectangular volume of the main chassis 112 in the nested state may be between about 50% and about 90% of the rectangular volume of the main chassis 112 in the expanded state. More specifically, the rectangular volume of the main chassis 112 in the nested state may be between about 60% and about 80% of the rectangular volume of the main chassis 112 in the expanded state. Other values may be possible. As explained above with respect to the vehicle 10, the ability of the ride-on vehicle 110 to transform between the nested state (having a comparatively small volume) and the expanded state (having a comparatively large volume) provides a number of advantages to manufacturers and retailers. The same advantages detailed above with respect to vehicle 10 are applicable to vehicle 110 and will not be restated for the sake of brevity.

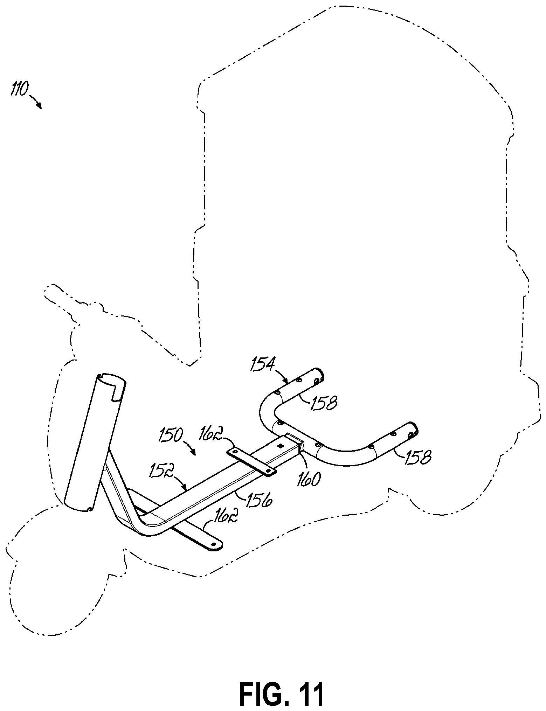

Referring specifically to Fig. 11, the main chassis 112 may include a structural support frame 150 on which the main chassis 112 is mounted. The structural support frame 150 may include a front frame portion 152 and a rear frame portion 154 movable relative to each other. The front frame portion 152 may be connected to and carry the front chassis portion 114 and the rear frame portion 154 may be connected to and carry the rear chassis portion 116. The structural support frame 150 may be formed by a plurality of tube members. For example, the front frame portion 152 may be formed by one or more front tube members 156 and the rear frame portion 154 may likewise be formed from one or more rear tube members 158. The tube members 156, 158 are sized to define a telescoping connection 160 at least between certain tube members 156, 158 of the front and rear frame portions 152, 154. Such a telescoping connection 160 is what allows the front frame portion 152 to be selectively removable from the rear frame portion 154 (or vice versa). The front frame portion 152 and/or the rear frame portion 154 may include additional bracing members 162 to add structural support to the ride-on vehicle 110. The structural support frame 150 may further include one or more lock members for securing the front frame portion 152 and the rear frame portion 154 together. By way of example, the one or more lock members may be bolts, spring pins, or the like. that secure the front frame portion 152 and the rear frame portion 154 together.

In one embodiment, the lock member may be manually imposed, such as by inserting a lock pin during assembly of the ride-on vehicle 110. In an alternative embodiment, the lock member may be of an automatic type, such as a spring-biased pin, that automatically locks the front and rear frame portions 152, 154 together. In one embodiment, the lock member may be configured to be releasable such that the front frame portion 152 and the rear frame portion 154 may be attached and detached from each other as desired. In an alternative embodiment, however, the lock member may be configured to be irreversible such that the front frame portion 152 and the rear frame portion 154 may not be detached from one another. In other words, after the ride-on vehicle 110 is initially assembled, the lock member may prevent one from disassembling the vehicle 110. Such may be important at least for reasons of safety and/or structural integrity.

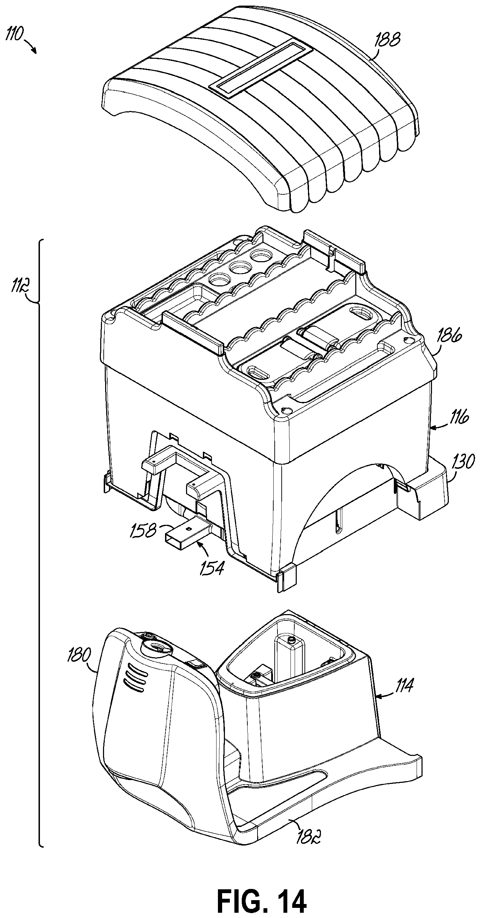

Figs. 14-17 illustrate the ride-on vehicle 110 in a disassembled state. Specifically, Figs. 16 and 17 show the vehicle 110 disassembled with the main chassis 112 in a nested state. As shown, in the nested state, the rear chassis portion 114 including the vending kiosk 186 may be stacked on top of the front chassis portion 114. The canopy 188 may be further stacked on top of the rear chassis portion 114. As noted above, in the nested state, the main chassis 112 has a compact design and is configured to fit within a relatively small package. As with the ride-on vehicle 10 described above, it should be understood that a number of components of the ride-on vehicle 110 could be advantageously placed about the nested main chassis 112 to further save space within the packaging for the ride-on vehicle 110. In other words, space in the main chassis 112 when in the nested state (e.g., about the front chassis portion 114 and the rear chassis portion 116) may be used to store the components of the ride-on vehicle 110 that are to be connected to vehicle 110 during assembly. Thus, the size of the package for the ride-on vehicle 110 may be maintained as small as possible by virtue of the reduction in size of the main chassis 112 due to the stacking of the rear chassis portion 116 on top of the front chassis portion 114.

When a consumer returns home from the retail outlet, the packaging containing the ride-on vehicle 110 may be opened and the ride-on vehicle 110 may be assembled. One step of the assembly process is to transform the main chassis 112 from the nested state to the expanded state. To transform the main chassis 112 and assemble the ride-on vehicle 110, the consumer may remove (unstack) the rear chassis portion 116 from on top of the front chassis portion 114 (or vice versa). The consumer may then connect the front frame portion 152 to the rear frame portion 154 (or vice versa) to create an assembled structural support frame 150 and thus a main chassis 112 in its expanded state. At that point, the front frame portion 152 may be locked (e.g., by one or more locking members, described above) relative to the rear frame portion 154, either manually or automatically, as discussed above. Once the main chassis 112 has been transformed to its expanded state, other components (e.g., wheels 136, seat 126, handlebars 184, or the like) may be connected to the main chassis 112 of the ride-on vehicle 110. One of ordinary skill in the art will understand how to connect these components to the main chassis 112 and no further explanation will be provided. Subsequent to this, the ride-on vehicle 110 is assembled and ready to be used.

In a further embodiment, the ride-on vehicle 10, 110 is an electric ride-on vehicle. In this regard, the ride-on vehicle 10, 110 may include a motor, a battery, and an actuator for energizing the motor. More particularly, in one embodiment, the motor may be an electric motor carried by the front or rear chassis portions 14, 114, 16, 116 and operatively coupled to one or more of the wheels 36, 136 on the ride-on vehicle 10, 110. In one embodiment, the battery may be a rechargeable type of battery carried by the front or rear chassis portions 14, 114, 16, 116 and operatively coupled to the motor for powering the motor. Additionally, the actuator may be a pedal, button, lever, or the like in the cabin area 74 or the foot board 182 area of the ride-on vehicle 10, 110 and operatively coupled to the motor and/or battery for energizing the motor. The details of the electronic system for powering the ride-on vehicle 10, 110 are generally known to those of ordinary skill in the art and a further description will be omitted for sake of brevity.

While the present disclosure has been illustrated by the description of specific embodiments thereof, and while the embodiments have been described in considerable detail, it is not intended to restrict or in any way limit the scope of the appended claims to such detail. The various features discussed herein may be used alone or in any combination within and between the various embodiments. Additional advantages and modifications will readily appear to those skilled in the art. The present disclosure in its broader aspects is therefore not limited to the specific details, representative apparatus and methods and illustrative examples shown and described. Accordingly, departures may be made from such details without departing from the scope of the present disclosure.

## Claims

1. A ride-on vehicle (10, 110), comprising:
a main chassis (12, 112) having a front chassis portion (14, 114) and a rear chassis portion (16, 116); and
a plurality of wheels (36, 136), at least one wheel (36, 136) being connectable to the front chassis portion (14, 114) and at least one wheel (36, 136) being connectable to the rear chassis portion (16, 116),
wherein the front chassis portion (14, 114) is movable relative to the rear chassis portion (16, 116) between a nested state and an expanded state, the main chassis (12, 112) having a volume in the nested state that is less than a volume in the expanded state.

2. The ride-on vehicle (10, 110) of claim 1, wherein the front chassis portion (14, 114) is slidable relative to the rear chassis portion (16, 116) between the nested state and the expanded state.

3. The ride-on vehicle (10, 110) of claim 1, wherein the rear chassis portion (16, 116) is stackable or unstackable relative to the front chassis portion (14, 114) between the nested state and the expanded state.

4. The ride-on vehicle (10, 110) of any of claims 1-3, wherein the rectangular volume of the main chassis (12, 112) in the nested state is less than the rectangular volume of the main chassis (12, 112) in the expanded state, optionally, wherein the rectangular volume of the main chassis (12, 112) in the nested state is between about 50% and about 90% of the rectangular volume of the main chassis (12, 112) in the expanded state, and preferably between about 60% and about 80% of the rectangular volume of the main chassis (12, 112) in the expanded state.

5. The ride-on vehicle (10, 110) of any of the preceding claims, further comprising:
a structural support frame (50, 150) having a front frame portion (52, 152) and a rear frame portion (54, 154) moveable relative to each other,
wherein the front frame portion (52, 152) is connected to and carries the front chassis portion (14, 114) and the rear frame portion (54, 154) is connected to and carries the rear chassis portion (16, 116), optionally, wherein:
the front frame portion (52, 152) is formed by one or more tube members (56, 156, 58, 158),
the rear frame portion (54, 154) is formed by one or more tube members (56, 156, 58, 158), and
wherein the front frame portion (52, 152) and the rear frame portion (54, 154) are connected through a telescoping connection (60, 160).

6. The ride-on vehicle (10, 110) of claim 5, wherein the structural support frame 50, 150) includes a lock member to lock a relative position of the front frame portion (52, 152) and the rear frame portion (54, 154) when the main chassis (12, 112) is in the expanded state, optionally wherein the lock member is releasable.

7. The ride-on vehicle (10, 110) of any of the preceding claims, wherein the ride-on vehicle (10, 110) is an electric ride-on vehicle.

8. A method of packaging a ride-on vehicle (10, 110), the ride-on vehicle comprising a main chassis (12, 112) having a front chassis portion (14, 114) and a rear chassis portion (16, 116), the front chassis portion (14, 114) being movable relative to the rear chassis portion (16, 116) between a nested state and an expanded state, the main chassis (12, 112) having a volume in the nested state that is less than a volume in the expanded state, the method comprising:
providing the main chassis (12, 112) in the nested state; and
placing the main chassis (12, 112) in a package (70) when in the nested state,
wherein the volume of the package (70) is smaller than the volume of a package (70) that contains the main chassis (12, 112) when in the expanded state, optionally wherein the package (70) is a rectangular box.

9. A method of shipping a ride-on vehicle (10, 110), the ride-on vehicle (10, 110) comprising a main chassis (12, 112) having a front chassis portion (14, 114) and a rear chassis portion (16, 116), the front chassis portion (14, 114) being movable relative to the rear chassis portion (16, 116) between a nested state and an expanded state, the main chassis (12, 112) having a volume in the nested state that is less than a volume in the expanded state, the method comprising:
at a first location, placing the ride-on vehicle (10, 110) in a package (70) when the main chassis (12, 112) is in the nested state; and
moving the package (70) from the first location to a second location while the main chassis (12, 112) is in the nested state,
optionally wherein the package (70) is a rectangular box.

10. The method of claim 9, wherein the first location is a manufacturing facility and the second location is a retail outlet.

11. A method of assembling a ride-on vehicle (10, 110), the ride-on vehicle (10, 110) comprising a main chassis (12, 112) having a front chassis portion (14, 114) and a rear chassis portion (16, 116), the front chassis portion (14, 114) being movable relative to the rear chassis portion (16, 116) between a nested state and an expanded state, the main chassis (12, 112) having a volume in the nested state that is less than a volume in the expanded state, the method comprising:
moving the main chassis (12, 112) from the nested state to the expanded state; and
connecting at least one wheel (36, 136) to the front chassis portion (14, 114) and connecting at least one wheel (36, 136) to the rear chassis portion (16, 116),
optionally, wherein moving the main chassis (12, 112) from the nested state to the expanded state includes moving the front chassis portion (14, 114) and the rear chassis portion (16, 116) in opposite directions, or
optionally, wherein moving the main chassis (12, 112) from the nested state to the expanded state includes unstacking one of the front chassis portion (14, 114) or the rear chassis portion (16, 116) from one of the rear chassis portion (16, 116) or the front chassis portion (14, 114).

12. The method of claim 11, wherein moving the main chassis (12, 112) from the nested state to the expanded state includes sliding the main chassis (12, 112) from the nested state to the expanded state.

13. The method of any of claims 11 or 12, further comprising locking a relative position of the front chassis portion (14, 114) and the rear chassis portion (16, 116) when in the expanded state.

14. The method of any of claims 11, 12 or 13, further comprising connecting one or more components to the main chassis (12, 112), the components including one or more of a steering wheel (38), a handlebars (184), a windshield (40), a seat (26, 126), a vendor kiosk (186), or a spoiler (42).

15. A product for storage or display at a retail outlet, comprising:
a box (70); and
a ride-on vehicle (10, 110) contained in the box (70), the ride-on vehicle (10, 110) comprising:
a main chassis (12, 112) having a front chassis portion (14, 114) and a rear chassis portion (16, 116); and
a plurality of wheels (36, 136), at least one wheel (36, 136) connectable to the front chassis portion (14, 114) and at least one wheel (36, 136) connectable to the rear chassis portion (16, 116),
wherein the front chassis portion (14, 114) is movable relative to the rear chassis portion (16, 116) between a nested state and an expanded state, the main chassis (12, 112) having a volume in the nested state that is less than a volume in the expanded state, and
wherein the main chassis (12, 112) is in the nested state when contained in the box (70),
optionally, wherein the box (70) further comprises one or more additional components for attachment to the main chassis (12, 112).
